# DEMANDE DE BREVET EUROPEEN

(11) **EP 2 071 487 A1**
(43) Date de publication de la demande: **17.06.2009**
(21) Numéro de dépôt: 07301593.5
(22) Date de dépôt: 27.11.2007
(51) Int. Cl.: G06F 21/24

(54) **Procédé de sécurisation des accès à un objet électronique connecté à un ordinateur**

(71) Demandeur: Axalto, 92190 Meudon (FR)
(72) Inventeur: Joffray, Olivier, 13705, La Ciotat Cédex (FR)

(57) **Abrégé**

L'invention concerne un procédé de sécurisation des accès à un objet électronique inséré dans un ordinateur.

L'objet électronique réalise au moins une opération sur un élément d'une application installée sur l'ordinateur. L'objet électronique sert notamment à authentifier l'utilisateur de l'objet électronique par l'ordinateur et à accorder des droits d'accès à l'objet électronique par au moins une application installée dans l'ordinateur.

Le procédé selon l'invention consiste à :
- transmettre une valeur aléatoire de l'objet électronique à l'ordinateur, une fois que cette opération est achevée, tout en conservant dans l'objet électronique les droits d'accès à l'objet électronique par l'utilisateur ;
- stocker la valeur aléatoire dans l'ordinateur ;
- libérer l'accès à l'objet électronique par l'application et, en cas de nouvel accès à l'objet électronique par l'application :
- transmettre la valeur aléatoire stockée dans l'ordinateur à l'objet électronique ;
- comparer dans l'objet électronique la valeur aléatoire reçue de l'ordinateur avec la valeur aléatoire précédemment transmise à l'ordinateur et, en cas de concordance des valeurs aléatoires, rétablir les droits précédemment acquis dans l'objet électronique, et ainsi permettre l'accès de l'application à l'objet électronique.

## Description

Le domaine de l'invention est celui de la sécurisation des accès à un objet électronique connecté à un ordinateur.

De manière connue, un tel objet électronique est par exemple une clé USB ou une carte à puce permettant à son titulaire / utilisateur de s'authentifier auprès de cet ordinateur ou plus précisément d'accéder à des ressources présentes dans l'objet électronique.

L'utilisation de cartes à puce ou de clés USB pour la sécurisation d'opérations est de plus en plus fréquente. La carte à puce ou la clé USB est insérée dans un lecteur approprié, raccordé à l'ordinateur ou faisant partie intégrante de celui-ci. Un programme installé sur l'ordinateur, par exemple une messagerie Outlook^{™}, accède aux fonctionnalités de la carte ou de la clé par l'intermédiaire d'un programme faisant acte d'interface, typiquement un logiciel médiateur ou intergiciel (middleware en anglais, terme que l'on utilisera par la suite).

Un middleware est un logiciel servant d'intermédiaire de communication entre plusieurs applications, généralement complexes ou distribuées sur un réseau informatique. Le middleware offre des services de haut niveau liés aux besoins de communication des applications (temps réel, sécurisation, sérialisation, transaction informatique, etc)...

C'est ce que l'on appelle également une communication interprocessus (en anglais *InterProcess Communication,* IPC). Elle vient se situer dans le modèle OSI au dessus de la couche de transport (couches 5, 6 et 7). La double mission d'interfaçage du middleware est :
- Le processus client ou serveur : la gestion des appels de fonctions de l'application ou la gestion du renvoi des résultats
- La mise en forme des données en vue de leur prise en charge par la couche transport. Ces deux missions sont assurées par deux composants distincts :

- le Protocole d'accès formaté (en anglais *Format And Protocol,* FAP) met en forme les différentes données au niveau du réseau ;
- l'interface de programmation (en anglais *Application Programming Interface,* API) se charge :

- des connexions et déconnexions avec le serveur ;
- de la définition de l'environnement de la connexion (variables de contexte, zones tampon) ; et
- du transfert des requêtes et de la réception des résultats (n-uplet par n-uplet ou de façon globale).

Ainsi, le middleware se situe "au-dessous" de l'applicatif, "au-dessus" du système d'exploitation et "entre" deux logiciels ayant besoin de communiquer entre eux.

Un programme installé sur l'ordinateur communique donc avec l'objet électronique inséré dans l'ordinateur par l'intermédiaire du middleware.

En matière de sécurité, un objet électronique, tel qu'une carte à puce ou une clé USB, permet par exemple d'authentifier l'utilisateur de l'ordinateur, de réaliser des authentifications externes, de manière symétrique ou asymétrique ou d'établir des canaux de communication sécurisés.

Dans le cadre d'une authentification d'un utilisateur, on considère par exemple qu'un utilisateur souhaite se connecter à un serveur distant, par exemple à un service marchand tel qu'eBay^{™}, pour y effectuer des transactions. L'exécution de transactions (achat ou vente de produits) nécessite, pour des raisons de sécurité, une authentification mutuelle entre le serveur du site et l'utilisateur. Par authentification mutuelle, on entend d'une part que l'utilisateur doit pouvoir être certain qu'il accède bien à un serveur du site d'eBay^{™} (auquel il va transmettre des coordonnées personnelles telles que des coordonnées bancaires par exemple) et d'autre part que le serveur du site d'eBay^{™} soit certain que l'utilisateur qui désire effectuer des transactions corresponde bien à celui qui s'est préalablement enregistré auprès de ce site et qu'il ne s'agit donc pas d'un fraudeur.

On entend donc par authentification la procédure qui consiste, pour un système informatique, à vérifier l'identité d'une entité (personne, ordinateur...), afin d'autoriser l'accès de cette entité à des ressources (systèmes, réseaux, applications...). L'authentification permet donc de valider l'authenticité de l'entité en question et, à la différence de l'identification qui permet de connaître l'identité d'une entité, l'authentification permet de vérifier cette identité.

L'authentification d'un utilisateur par un objet électronique lui appartenant, par exemple par un serveur distant, est préférable à son authentification par mot de passe combiné avec un nom d'utilisateur car l'utilisateur peut, hormis avoir perdu son mot de passe et ne plus donc pouvoir accéder au serveur, s'être fait voler son mot de passe et son nom d'utilisateur. Un tiers mal intentionné peut alors se faire passer pour le véritable détenteur du nom d'utilisateur et du mot de passe et effectuer des transactions à sa place. Cette solution présente donc l'inconvénient d'être peu sécurisée.

L'objet électronique est donc couramment utilisé pour décrypter des courriers électroniques reçus, pour encrypter des courriers électroniques à envoyer, pour signer des documents ou des courriers électroniques, ou alors plus généralement pour réaliser une fonction cryptographique sur des documents issus d'une application installée sur l'ordinateur, par exemple Outlook^{™}. En pratique, sur les cartes actuelles, la carte se contente de déchiffrer un message court qui contient une clé symétrique utilisée pour déchiffrer le message. Donc le message est déchiffré / chiffré par l'ordinateur et non pas par la carte. La carte se contente de déchiffrer la clé symétrique protégeant le message transmis.

Les cartes à puce contiennent classiquement des fonctions de calcul cryptographique qui doivent être exécutées avant qu'un accès à un service compris dans la carte puisse être autorisé. Ces fonctions de calcul cryptographique ont par exemple pour mission de vérifier l'authenticité d'un code PIN entré par l'utilisateur ou d'établir un canal de communication sécurisé. Elles nécessitent généralement un temps de traitement important, de l'ordre d'une dizaine de secondes. A titre d'exemple, on peut citer l'établissement d'un canal sécurisé par Diffie-Hellmann, un calcul de signature employant de longues clés RSA (1536 ou 2048 bits),...

Ces opérations se cumulent souvent les unes aux autres lorsque le niveau de sécurité personnalisé dans l'objet électronique est important. Par exemple, un calcul de signature RSA peut nécessiter une vérification d'un code PIN, l'établissement d'un canal sécurisé, la vérification de certificats cryptographiques pour authentifier les clés RSA, une authentification RSA externe,... L'exécution de ces opérations successives a pour conséquence un rallongement important du temps d'exécution d'un simple décryptage d'un courrier électronique ou de sa signature.

Par ailleurs, une fois qu'un contrôle de sécurité a été effectué dans l'objet électronique, par exemple la simple vérification d'un code PIN, l'accès à des fonctionnalités avancées est permis, par exemple la signature d'un document ou le décryptage d'un fichier. Cette permission dure jusqu'à ce que l'utilisateur retire l'objet électronique de l'ordinateur. Typiquement, un utilisateur demande l'accès à des fonctions sécurisées en arrivant à son travail et retire son objet électronique lorsqu'il quitte son lieu de travail. L'accès aux fonctions sécurisées est donc assuré pendant une longue durée.

Ceci permet à l'utilisateur de ne pas avoir à rentrer son code PIN à chaque accès à une fonction sécurisée, par exemple à chaque réception d'un courrier électronique crypté.

L'inconvénient de cette situation est que l'objet électronique reste inséré dans l'ordinateur même lorsque l'application qui doit utiliser cet objet électronique n'accède pas aux fonctionnalités de sécurité de l'objet électronique. Il peut de ce fait arriver qu'un programme malveillant, typiquement un virus, accède à ces fonctionnalités de sécurité pour effectuer des opérations sans l'assentiment de l'utilisateur.

Une solution connue pour pallier à ce problème consiste à stocker, au niveau du middleware de l'ordinateur utilisé pour accéder au contenu de l'objet électronique, le code PIN de l'utilisateur. Ce stockage est typiquement réalisé en cache. Lorsque l'application installée sur l'ordinateur n'a plus besoin des fonctionnalités de l'objet électronique, par exemple lorsqu'un courrier électronique a été décrypté, le middleware associé déconnecte logiquement l'objet électronique de l'ordinateur pour produire le même effet qui serait obtenu par un retrait de l'objet électronique de l'ordinateur. Ceci correspond à un reset de l'objet électronique, ce reset nécessitant à nouveau l'entrée du code PIN. Mais comme le code PIN a été mémorisé par le middleware, ce dernier le renvoie à l'objet électronique lorsque celui-ci doit à nouveau entrer en fonction. Ceci évite donc en fait une nouvelle entrée du code PIN par l'utilisateur. Cette solution présente cependant deux inconvénients majeurs :
- le stockage du code PIN de l'utilisateur dans l'ordinateur est dangereux car un programme malveillant installé sur l'ordinateur pourrait le détecter et le transmettre à l'objet électronique. L'inconvénient cité plus haut n'est dans ce cas pas évité ;
- le renvoi du code PIN à l'objet électronique déclenche la même longue procédure d'authentification de l'utilisateur citée précédemment et les fonctionnalités de l'objet électronique ne sont donc pas disponibles immédiatement.
   La présente invention a pour objectif de remédier à ces inconvénients.
Plus précisément, un des objectifs de l'invention est de proposer un procédé de sécurisation des accès à un objet électronique inséré dans un ordinateur, ce procédé ne nécessitant pas le stockage du code PIN de l'utilisateur et permettant, après un accès à des ressources de cet objet électronique par une application résidant sur l'ordinateur, un accès ultérieur à ces ressources presque immédiat.

Cet objectif, ainsi que d'autres qui apparaîtront par la suite, est atteint grâce à un procédé de sécurisation des accès à un objet électronique connecté à un ordinateur, l'objet électronique réalisant au moins une opération sur un élément d'une application installée sur l'ordinateur, l'objet électronique servant notamment à authentifier l'utilisateur de l'objet électronique par l'ordinateur et à accorder des droits d'accès à l'objet électronique par au moins une application installée dans l'ordinateur, ce procédé consistant à :
- transmettre une valeur aléatoire de l'objet électronique à l'ordinateur, une fois que cette opération est achevée, tout en conservant dans l'objet électronique les droits d'accès à l'objet électronique par l'utilisateur ;
- stocker la valeur aléatoire dans l'ordinateur ;
- libérer l'accès à l'objet électronique par l'application et, en cas de nouvel accès à l'objet électronique par l'application :

- transmettre la valeur aléatoire stockée dans l'ordinateur à l'objet électronique ;
- comparer dans l'objet électronique la valeur aléatoire reçue de l'ordinateur avec la valeur aléatoire précédemment transmise à l'ordinateur et, en cas de concordance des valeurs aléatoires, rétablir les droits précédemment acquis dans l'objet électronique, et ainsi permettre l'accès de l'application à l'objet électronique.

Préférentiellement, l'accord des droits d'accès à l'objet électronique par au moins une application installée dans l'ordinateur est donné lorsque l'utilisateur a entré un code PIN correct dans l'objet électronique.

L'objet électronique est avantageusement une carte à puce.

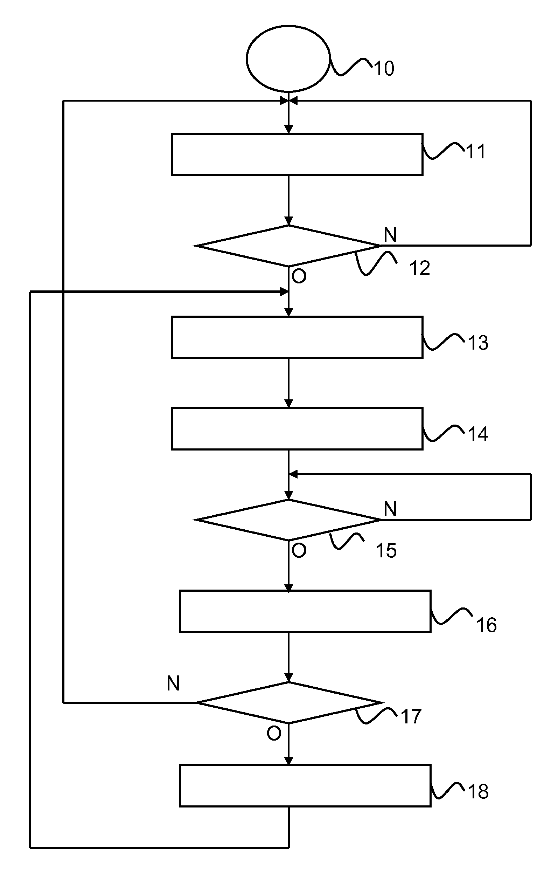

L'invention sera mieux comprise à la lecture de la description suivante d'un mode de mise en oeuvre préférentiel, donné à titre illustratif et non limitatif, et de la figure unique annexée représentant un organigramme du procédé selon l'invention.

Sur la figure annexée, l'étape 10 constitue une étape d'initialisation durant laquelle l'utilisateur d'un ordinateur insère un objet électronique, par exemple une carte à puce, dans un ordinateur. Un reset de la carte s'opère durant cette étape.

A l'étape 11, l'utilisateur est invité à entrer son code PIN pour s'authentifier auprès de cet ordinateur. L'utilisateur tape alors le code PIN sur le clavier de l'ordinateur et ce code PIN est transmis à la carte pour être comparé avec le code PIN résidant dans la carte.

A l'étape 12, le code PIN entré par l'utilisateur est comparé avec le code PIN résidant dans la carte. Si les deux coïncident, on passe à l'étape 13. Dans le cas contraire, l'utilisateur est à nouveau invité à entrer son code PIN (étape 11).

A l'étape 13, la carte effectue une opération sur un élément d'une application installée sur l'ordinateur. Cet élément est par exemple un fichier d'une application, par exemple un .pst d'Outlook^{™} ou un .ppt de Powerpoint^{™}. Les droits d'accès à la carte sont donc accordés à cette application. L'application accède à la carte via le middleware installé sur l'ordinateur. L'opération exécutée par la carte est par exemple une authentification d'un serveur Web distant, un décryptage d'un courrier électronique ou alors une signature d'un document. Une fois l'opération terminée, l'application n'a plus besoin de la carte et s'apprête à libérer l'accès à celle-ci.

Typiquement, dans un environnement Windows^{™}, le middleware accédant à la carte bénéficie d'un accès exclusif, c'est-à-dire qu'aucune autre application que celle couramment en communication avec la carte ne peut accéder aux fonctionnalités de la carte. Les pilotes Microsoft^{™} offrent donc un certain niveau de sécurité puisque pendant ces accès à la carte par le logiciel autorisé, un logiciel malveillant ne pourra pas accéder aux fonctionnalités de la carte.

A l'étape 14, la carte génère une valeur aléatoire, typiquement un nombre sur 8 octets. Cette valeur aléatoire est transmise au middleware qui la stocke. Egalement durant cette étape, la carte se verrouille, c'est-à-dire qu'elle devient inopérationnelle vis-à-vis de l'application précédemment utilisée. En revanche, les droits d'accès de l'utilisateur sont conservés dans la carte et notamment un drapeau indiquant que le code PIN précédemment entré à l'étape 11 est correct. De ce fait, l'accès à la carte est libéré, il n'y a plus d'accès exclusif à celle-ci.

A l'étape 15, il est vérifié si le middleware qui gère la carte a besoin des ressources de celle-ci. Si non, la surveillance d'une tentative d'accès à la carte est poursuivie (exécution de l'étape 15 en boucle).

Si un nouvel accès à la carte est demandé, par exemple parce que l'utilisateur a besoin de décrypter un autre document, on passe à l'étape 16 qui consiste à transmettre la valeur aléatoire stockée dans le middleware, et donc dans l'ordinateur, à la carte. La carte compare alors, lors de l'étape 17, la valeur aléatoire reçue de l'ordinateur avec la valeur aléatoire précédemment transmise à l'ordinateur et, en cas de concordance (égalité) des valeurs aléatoires, permet l'accès de l'application à la carte (étape 18). Les droits précédemment acquis dans la carte sont alors rétablis et l'utilisateur peut à nouveau utiliser sa carte sans avoir à rentrer à nouveau son code PIN. On repasse alors à l'étape 13 pour effectuer l'opération demandée par l'utilisateur.

En revanche, si les valeurs aléatoires ne concordent pas, l'utilisateur est invité à entrer son code PIN (étape 11), comme s'il venait d'insérer la carte dans l'ordinateur.

L'invention permet donc de sécuriser l'accès à un objet électronique inséré dans un ordinateur, sans nécessiter de stockage du code PIN de l'utilisateur et permet, après un accès à des ressources de cet objet électronique par une application résidant sur l'ordinateur, un accès ultérieur à ces ressources presque immédiat.

## Revendications

1. Procédé de sécurisation des accès à un objet électronique connecté à un ordinateur, ledit objet électronique réalisant au moins une opération sur un élément d'une application installée sur ledit ordinateur, ledit objet électronique servant notamment à authentifier l'utilisateur dudit objet électronique par ledit ordinateur et à accorder des droits d'accès audit objet électronique par au moins une application installée dans ledit ordinateur, **caractérisé en ce qu'**il consiste à :
- transmettre une valeur aléatoire dudit objet électronique audit ordinateur, une fois que ladite opération est achevée, tout en conservant dans ledit objet électronique les droits d'accès audit objet électronique par ledit utilisateur ;
- stocker ladite valeur aléatoire dans ledit ordinateur;
- libérer l'accès audit objet électronique par ladite application et, en cas de nouvel accès audit objet électronique par ladite application :
- transmettre ladite valeur aléatoire stockée dans ledit ordinateur audit objet électronique ;
- comparer dans ledit objet électronique ladite valeur aléatoire reçue dudit ordinateur avec la valeur aléatoire précédemment transmise audit ordinateur et, en cas de concordance desdites valeurs aléatoires, rétablir les droits précédemment acquis dans ledit objet électronique, et ainsi permettre l'accès de ladite application audit objet électronique.

2. Procédé selon la revendication 1, **caractérisé en ce que** ledit accord des droits d'accès audit objet électronique par au moins une application installée dans ledit ordinateur est donné lorsque ledit utilisateur a entré un code PIN correct dans ledit objet électronique.

3. Procédé selon l'une des revendications 1 et 2, **caractérisé en ce que** ledit objet électronique est une carte à puce.
